# EUROPEAN PATENT APPLICATION

(11) **EP 1 150 499 A2**
(43) Date of publication of application: **31.10.2001**
(21) Application number: 01303743.7
(22) Date of filing: 24.01.2001
(51) Int. Cl.: H04N 5/45

(54) **On-screen display system**

(30) Priority: 24.04.2000 KR 2000021556
(71) Applicant: SAMSUNG ELECTRONICS CO., LTD., Suwon-City, Kyungki-do (KR)
(72) Inventor: Lee, Sung-Lyong, Kangnam-Ku, Seoul (KR)
(74) Representative: Geary, Stuart Lloyd

(57) **Abstract**

The amount of data transfer between an OSD data source apparatus (100) and a display apparatus (300) is reduced by arranging for the display apparatus to cache OSD data. After an initial transfer of OSD data, subsequently ID codes for OSD data elements are transmitted and then used by the display apparatus (300) to retrieve and display the desired image.

## Description

The present invention relates to:-
(a) a first on-screen display method comprising transmitting on-screen display image data from a source apparatus to an apparatus having a display function;
(b) an on-screen display data source apparatus comprising memory means storing on-screen display image data elements and respective IDs therefor, control means for selecting on-screen display image data elements and their IDs from the memory means in response to an input signal, and transmission means for transmitting retrieved on-screen display image data elements and ID;
(c) a second on-screen display method comprising receiving on-screen display image data from a source apparatus and displaying an image defined by said image data; and
(d) a display apparatus comprising receiving means for receiving on-screen display image data from a source thereof, and display means for displaying images defined by image data received by the receiving means.

A digital television (DTV) is provided with not only a digital television image signal received through its own tuner but also image information from various other sources and displays them on a screen. That is, the DTV, for example, is provided with a satellite television signal provided from a satellite broadcast receiver, commonly referred to as a "set top box" (STB), an image signal from a digital video disc (DVD) player, and an image signal from a digital video tape recorder (DVCR) via an IEEE 1394 bus.

The DTV 1394 interface standard is specified in the EIA-775 standard series. A source providing an image signal is defined as a producer, and an apparatus, such as a DTV, receiving and displaying an image signal is defined as a consumer. In the DTV 1394 standard, an image signal is provided to a consumer in an MPEG transport stream, and on-screen display (OSD) data is provided to a consumer in a bitmap format. Also, a producer and a consumer exchange control and state signals.

Producers and consumers are commonly controlled by means of respective remote controllers. Therefore, OSD screens are used to provide the display part of the user interface of a consumer. Although a producer is controlled interactively using its remote controller, the display part of its user interface is provided by OSD screens displayed by the DTV, i.e. the consumer. Therefore, if large amounts of OSD data are transmitted from the producer to the consumer, providing a responsive and smooth display becomes difficult. Smooth operation of the OSD display becomes more important as this method of interactivity become more widely used.

The present invention addresses the afore-mentioned problems.

A first on-screen display method according to the present invention is characterised by sending an ID for said image data with said image data and subsequently sending said ID without said image data when the display of the image defined by said image data is required. Preferably, said ID is accompanied by location data defining a display position for said image.

An on-screen display data source apparatus according to the present invention is characterised in that the control means is responsive to a first instance of an input signal to cause the transmission means to transmit an on-screen display image data element and its ID and responsive to a second instance of said input signal to cause the transmission means to transmit the previously transmitted ID without the previously transmitted data element. Preferably, the control means is responsive to input signals to cause the transmission means to transmit location defining data with said IDs.

A second on-screen display method according to the present invention, which complements the first, is characterised by receiving an ID for said image data with said image data, storing said image data and said ID, subsequently receiving said ID without said image data, retrieving said image data on the basis of the subsequently received ID and displaying said image again. Preferably, said ID is accompanied by location data defining a display position for said image.

A display apparatus according to the present invention, which complements the afore-mentioned source apparatus, is characterised by means for storing received on-screen display image data in association with IDs received therewith, and means for retrieving stored on-screen display image data for display by the display means in dependence on an ID received by the receiving means without image data. Preferably, the receiving means is configured to receive location data with said IDs and the display means is configured to display images, defined by said image data, at positions defined by location data received with the associated IDs.

An embodiment of the present invention will now be described, by way of example, with reference to the accompanying drawings in which:-
Figure 1 is a drawing showing one embodiment of an OSD object display apparatus according to the present invention;
Figure 2 is a circuit block diagram of the apparatus of Figure 1;
Figure 3 is a drawing showing a data structure of an output asynchronous plug register OAPR of the producer of the apparatus of Figure 1;
Figure 4 is a drawing showing a sub frame structure of OSD object data according to the present invention; and
Figure 5 is a drawing showing an OSD ID sub frame structure transmitted from the producer in Figure 1 to the consumer in Figure 1.

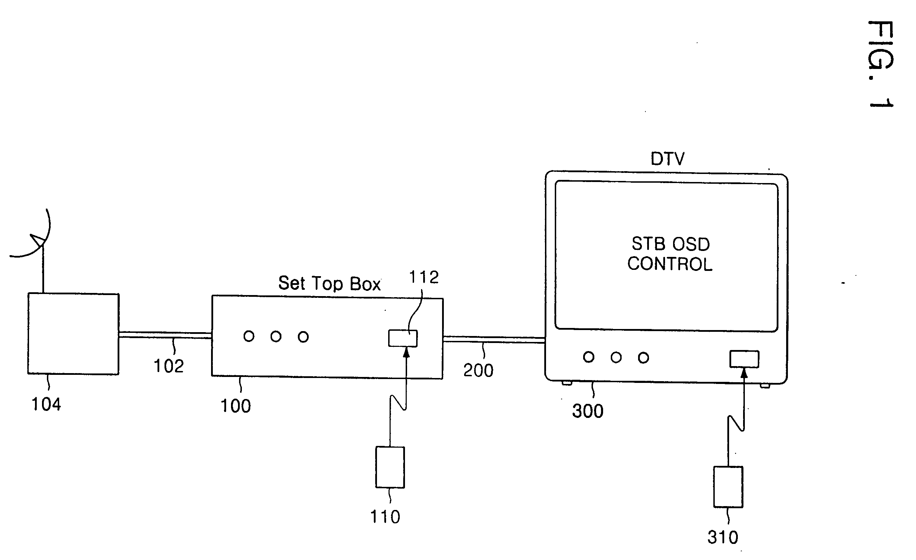

Referring to Figure 1, a set top box 100, acting as a producer, receives a digital satellite broadcast signal from a satellite antenna 104 via a coaxial cable 102. The set top box 100 detects an MPEG transport stream in the received satellite broadcast signal and then provides the detected MPEG transport stream to a DTV 300 through a DTV 1394 bus 200.

The set top box 100 receives commands from a remote controller 110 through a remote control signal receiving part 112. Corresponding OSD data is generated in response to received commands and is provided to the DTV 300 through the DTV 1394 bus 200.

The DTV 300 recovers the image signal by decoding the received MPEG transport stream, using an MPEG decoder, and displays it on a a screen. Received OSD data is overlaid on the image from the MPEG decoder. Therefore, a user can control the STB 100 by viewing an OSD image, produced from data generated in response to operation of the STB's remote controller 110, displayed on a screen of the DTV.

The DTV 300 is controlled through a DTV remote controller 310.

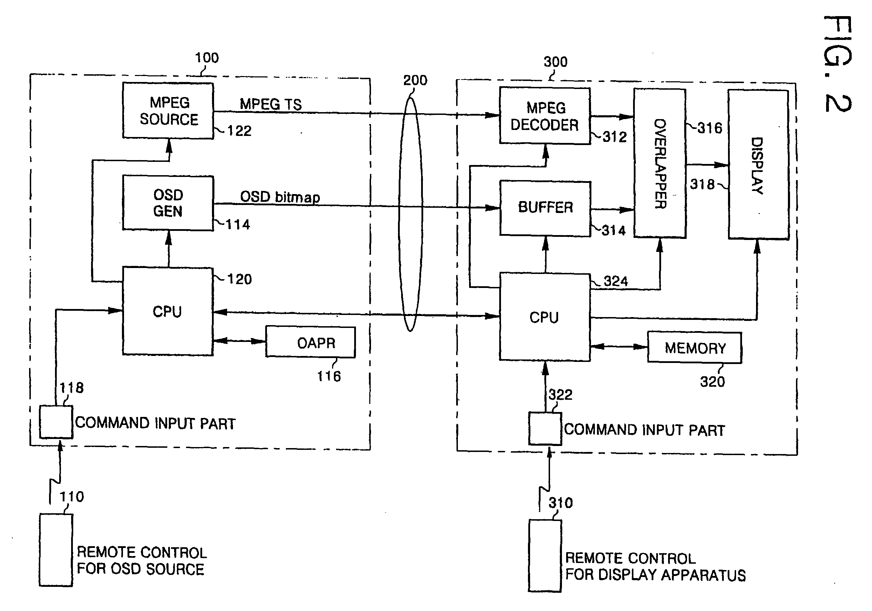

Referring to Figure 2, the set top box 100 and the DTV 300 are interconnected by a DTV 1394 bus 200.

The set top box 100 includes an MPEG source 112, an OSD generator 114, an output asynchronous plug register 116, a command input part 118 and a control part 120. The MPEG source 112 detects an MPEG transport stream in a received satellite broadcast signal under the control of the control part 120 and provides the detected MPEG transport stream to the DTV 300. The OSD generator 114 generates OSD display data in bitmap format under the control of the control part 120.

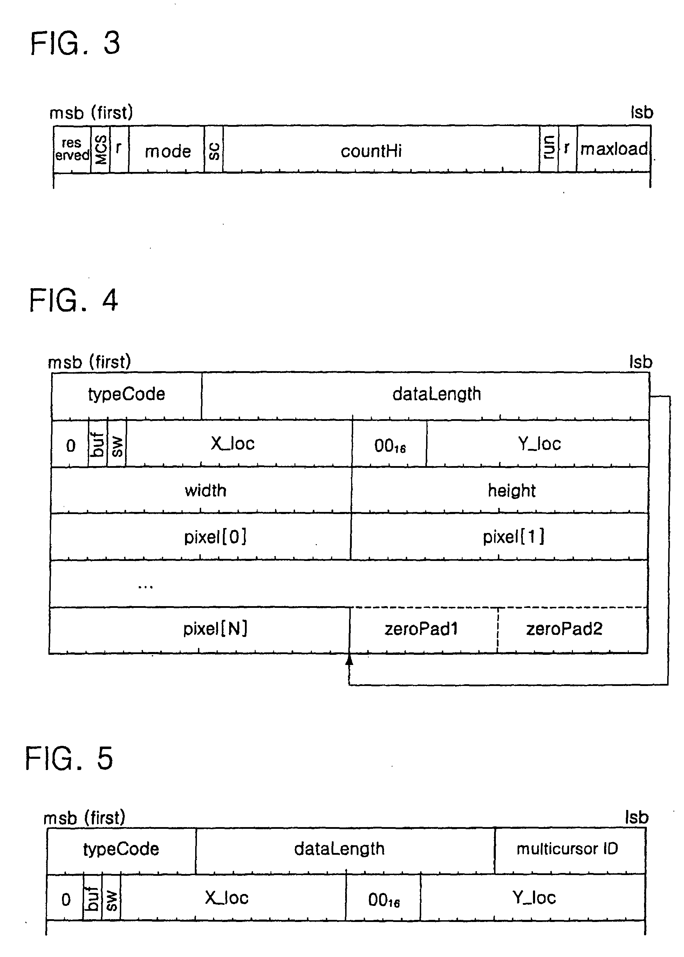

The output asynchronous plug register (OAPR) 116 stores four bytes of data as shown in Figure 3. The data structure of the OAPR in Figure 3 is as shown in Table 1 below.

**Table 1**

| **CLASSIFICATION** | **DESCRIPTION** |
|---|---|
| RESERVED | 0 |
| CS | BIT INDICATING POSSIBILITY OF CURSOR SAVE |
| MODE | 0:FREE, 1:RESERVED, 2:SUSPEND, |
| | |
| | 3:RESERVED, 4:RESUME |
| | |
| | 5:SEND, 6-7:RESERVED |
| SC | TOGGLE BIT |
| COUNTHi | 18 BITS COUNT VALUE |
| RUN | |
| RESERVED | 0 |
| MAX LOAD | INDICATE DATA-PAYLOAD SIZE FOR ENTERING 4 BITS SEGMENT BUFFER |

According to the present invention, the OAPR information is provided from the DTV to the STB in an initial connection of the STB 100 and the DTV 300. Then, in the case of a DTV having its own OSD object data save possibility indicating data, if the OSD object data save possibility information is provided to the STB 100, the STV sets the CS bit of cursor data save possibility indicating bit to "1"

According to the present invention, in the case of displaying OSD display data transmitted from the STB 100 to the DTV 300, first of all, all OSD display data are allocated respective IDs in an object unit and then transmitted. From then on, only the OSD object ID and display location information are transmitted.

The DTV 300 includes an MPEG decoder 312, a buffer 314, an overlayer 316, an image display 318, a memory 320, a command input part 322 and a control part 324. The MPEG decoder 312 outputs image data to the overlayer 316 by decompressing compressed image data in the input MPEG transport stream. The buffer 314 buffers the provided OSD data and provides it to the overlayer 316 under the control of the control part 324. The overlayer 316 overlays the OSD data over the image data and provides the combined signal to the image display 318. The memory 320 stores the OSD display data provided from the STB 100. The command input part 322 receives command signals generated by the remote controller 310 and provides the command signals to the control part 324.

In the display apparatus, the provided OSD display data is indexed by its OSD object IDs and stored. Therefore, an OSD object corresponding to the next provided OSD object ID is read from the memory and is displayed on a screen at the location provided.

The STB 100 generates and transmits an OSD object data sub frame, as shown in Figure 4, by first controlling the OSD generator 114 by the control part 120 in the case that an OSD cursor display command is input using the remote controller 110.

The OSD object data sub frame in Figure 4 is constituted with a TYPECODE of one byte, a data length of three bytes and object data of a plurality of bytes. The TYPECODE, for example, has a series of different code values of "0XE1", "0XE2", . . .. Here, "0X" of "0XE1" indicates hexadecimal, i.e. base 16. Therefore, "E1" indicates the value in hexadecimal.

In the DTV 300, plural OSD object are stored in a memory according to their TYPECODEs.

The OSD ID sub frame in Figure 5 includes a TYPECODE of one byte, a data length of two bytes, an object ID of one byte, a BUF element of one byte, a SW element of one byte, a 12-bit X co-ordinate for a cursor display location and a 12-bit Y co-ordinate value for the cursor display location. The TYPECODE of the OSD ID sub frame is set as "0XE0". The object ID is the ID of the corresponding object data, that is, values of "0XE1, 0XE2, ... " of TYPECODE of the OSD object data sub frame. The data length consists of 5 bytes. BUF has "0" value and SW has "0" value. The "00" of BUF and SW is a control code for locating cursor display data in the buffer 314 promptly in the consumer.

Therefore, the DTV 300 analyzes the sub frame in Figure 5 received in the buffer 314 and, if the TYPECODE value is "0XE0", reads the object having the same TYPECODE from the memory 320 and displays the object at a given XY position of the display.

Therefore, according to the present invention, the STB 100 does not send the whole OSD display data in bitmap format every time to the DTV 300. The STB 100 sends the whole OSD display data by giving an ID in an object unit in early stages, and from then on, sends only an OSD object ID and display location information. Then, the DTV 300 reads an OSD object having the ID from memory and displays it at a given location on the screen. Therefore, because the amount of data reception and transmission between the STB 100 and the DTV 300 is reduced greatly, OSD display on the screen can be performed very fast, and therefore it can be viewed very naturally.

Particularly, it can be very effectual in displaying animation screen like a game.

According to the present invention, the representation of a game etc. can be performed smoothly because various OSD objects can be displayed very fast by transmitting an ID of an OSD object and display location information, not by transmitting a large amount of OSD display data in bitmap format every time between a producer and a consumer.

## Claims

1. An on-screen display method comprising transmitting on-screen display image data (pixel[0], pixel[1], ..., pixel[N]) from a source apparatus (100) to an apparatus (300) having a display function, **characterised by** sending an ID (TYPECODE) for said image data (pixel[0], pixel[1], ..., pixel[N]) with said image data (pixel[0], pixel[1], ..., pixel[N]) and subsequently sending said ID (TYPECODE) without said image data (pixel[0], pixel[1], ..., pixel[N]) when the display of the image defined by said image data (pixel[0], pixel[1], ..., pixel[N]) is required.

2. An method according to claim 1, wherein said ID (TYPECODE) is accompanied by location data (X_loc, Y_loc) defining a display position for said image.

3. An on-screen display data source apparatus comprising:-
memory means (114) storing on-screen display image data elements (pixel[0], pixel[1], ..., pixel[N]) and respective IDs (TYPECODE) therefor;
control means (120) for selecting on-screen display image data elements and their IDs from the memory means in response to an input signal; and
transmission means (114, 120) for transmitting retrieved on-screen display image data elements and IDs (TYPECODE),
**characterised in that** the control means (120) is responsive to a first instance of an input signal to cause the transmission means (114) to transmit an on-screen display image data element (pixel[0], pixel[1], ..., pixel[N]) and its ID (TYPECODE) and responsive to a second instance of said input signal to cause the transmission means (114, 120) to transmit the previously transmitted ID (TYPECODE) without the previously transmitted data element (pixel[0], pixel[1], ... , pixel[N]).

4. An apparatus according to claim 3, wherein the control means (120) is responsive to input signals to cause the transmission means (120) to transmit location defining data (X_loc, Y_loc) with said IDs (TYPECODE).

5. An on-screen display method comprising receiving on-screen display image data (pixel[0], pixel[1], ..., pixel[N]) from a source apparatus (100) and displaying an image defined by said image data (pixel[0], pixel[1], ..., pixel[N]), **characterised by** receiving an ID (TYPECODE) for said image data (pixel[0], pixel[1], ..., pixel[N]) with said image data (pixel[0], pixel[1], ..., pixel[N]), storing said image data (pixel[0], pixel[1], ..., pixel[N]) and said ID (TYPECODE), subsequently receiving said ID (TYPECODE) without said image data (pixel[0], pixel[1], ..., pixel[N]), retrieving said image data (pixel[0], pixel[1], ... , pixel[N]) on the basis of the subsequently received ID (TYPECODE) and displaying said image again.

6. An method according to claim 5, wherein said ID (TYPECODE) is accompanied by location data (X_loc, Y_loc) defining a display position for said image.

7. A display apparatus comprising:-
receiving means (314, 324) for receiving on-screen display image data (pixel[0], pixel[1], ..., pixel[N]) from a source thereof (100); and
display means (316, 318) for displaying images defined by image data (pixel[0], pixel[1], ... , pixel[N]) received by the receiving means (314, 324),
**characterised by**
means (320) for storing received on-screen display image data (pixel[0], pixel[1], ... , pixel[N]) in association with IDs (TYPECODE) received therewith; and
means (324) for retrieving stored on-screen display image data (pixel[0], pixel[1], ..., pixel[N]) for display by the display means (316, 318) in dependence on an ID received by the receiving means (314, 324) without image data (pixel[0], pixel[1], ..., pixel[N]).

8. An apparatus according to claim 7, wherein the receiving means (314, 324) is configured to receive location data (X_loc, Y_loc) with said IDs (TYPECODE) and the display means (316, 318) is configured to display images, defined by said image data (pixel[0], pixel[1], ... , pixel[N]), at positions defined by location data (X_loc, Y_loc) received with the associated IDs (TYPECODE).

9. An OSD display method, comprising:
a step that an OSD source transmits OSD display data to a display apparatus by giving each peculiar ID in at least more than one OSD object unit;
a step that said display apparatus stores the received OSD display data in at least more than one OSD object unit in a memory;
a step that said OSD source transmits ID and display location information of an OSD object to said display apparatus; and
a step that said display apparatus reads OSD object display data having a corresponding ID from said memory and displays the OSD object display data on a screen in response to the ID and the display location information of the OSD object received.

10. An OSD object display apparatus, comprising:
a remote controller for OSD source for generating an OSD object display command on a screen;
an OSD source which transmits OSD display data by giving each peculiar ID in at least more than one OSD object unit and transmits an OSD object ID and display location information in case that there is an OSD object display command from said remote controller for OSD source; and
a display apparatus which stores at least more than one OSD object display data received from said OSD source in a memory and reads OSD object display data having a corresponding ID from the memory in response to the received OSD object ID and display location information and displays on a screen.
